Europäisches Patentamt

European Patent Office

Office européen des brevets

(19)

(11) Veröffentlichungsnummer : **0 355 337 B1**

(12) **EUROPÄISCHE PATENTSCHRIFT**

(45) Veröffentlichungstag der Patentschrift :
06.05.92 Patentblatt 92/19

(51) Int. Cl.$^5$ : **C01B 33/033**

(21) Anmeldenummer : **89112082.6**

(22) Anmeldetag : **01.07.89**

(54) **Verfahren zur Herstellung von Solarsilicium.**

(30) Priorität : **15.07.88 DE 3824065**

(43) Veröffentlichungstag der Anmeldung :
**28.02.90 Patentblatt 90/09**

(45) Bekanntmachung des Hinweises auf die
Patenterteilung :
**06.05.92 Patentblatt 92/19**

(84) Benannte Vertragsstaaten :
**DE FR GB IT**

(56) Entgegenhaltungen :
**EP-A- 0 123 100**
**DE-C- 874 137**
**CHEMICAL ABSTRACTS, Band 57, Nr. 3, Seite**
**1962, Zusammenfassung Nr. 3076i-3077a; S.**
**YOSHIZAWA et al.: "Reduction of silicontetra-**
**chloride with aluminum" & KOGYO KAGAKU**
**ZASSHI 64, 1347-50(1961); & Kat. D,A**

(56) Entgegenhaltungen :
**SEVENTH E.C. PHOTOVOLTAIC SOLAR ENER-**
**GY CONFERENCE. Proceedings of the inter-**
**national conference, held at Sevilla,**
**Spain,27.-31. Oktober 1986, D. Reidel Publ.**
**Co., Dordrecht, NL; I.A. SCHWIRTLICH et al.:**
**"Solar-grade Silicon "**

(73) Patentinhaber : **BAYER AG**
**W-5090 Leverkusen 1 Bayerwerk (DE)**

(72) Erfinder : **Kurz, Günter, Dr.**
**Niederrheinstrasse 288**
**W-4000 Düsseldorf 31 (DE)**
Erfinder : **Abels, Martin**
**Stettiner Strasse 84**
**W-4150 Krefeld (DE)**
Erfinder : **Schwirtlich, Ingo, Dr.**
**Hausweberstrasse 26**
**W-4150 Krefeld 1 (DE)**
Erfinder : **Woditsch, Peter, Dr.**
**Deswatinessstrasse 83**
**W-4150 Krefeld (DE)**

## Beschreibung

Die vorliegende Erfindung betrifft ein Verfahren zur Herstellung von Silicium durch Umsetzung von gasförmigen Siliciumverbindungen der allgemeinen Formel $SiH_nX_{4-n}$, wobei X Halogen bedeutet und n Werte von 0 bis 3 annehmen kann, mit Aluminium.

Um durch photovoltaische Stromerzeugung Sonnenenergie großtechnisch im terrestrischen Bereich zu nutzen, kommt aus wirtschaftlichen und ökologischen Gründen z.Z. als Halbleitermaterial nur Silicium in Frage. Bis heute wird fast ausschließlich Silicium eingesetzt, dessen Ursprung im Halbleitersilicium zu sehen ist und dessen Herstellungsverfahren aus dem Bereich der Halbleitertechnologie bekannt sind.

Während die Materialkosten in der Halbleiterindustrie von untergeordneter Bedeutung sind, kommt ihnen bei der Photovoltaik eine ausschlaggebende Bedeutung zu, da die elektrische Leistung einer Solarzelle der Solarzellenfläche und damit der Materialmenge proportional ist.

Zur Lösung terrestrischer Energieprobleme kann die Photovoltaik dann beitragen, wenn es gelingt, Solarzellen zu entwickeln, die hinsichtlich Preis und Wirkungsgrad kostenmäßig mit den konventionellen Energiequellen konkurrieren können. Eine Grundbedingung zur Nutzung der Sonnenenergie im großen Maßstab ist daher ein wirtschaftliches Verfahren zur Siliciumherstellung, das den Anforderungen an Solarsilicium genügt.

Zur Herstellung von Solarsilicium wurden verschiedene Verfahren vorgeschlagen:

Die Reduktion hochreinen Quarzsandes mit hochreinem Kohlenstoff in der DE-A 3 013 319,

die Reinigung von metallurgischem Silicium (DE-A 2 623 413)

die Reduktion von $SiO_2$ mit Aluminium (EP-A 0 029 182)

die Reduktion von $SiF_4$ oder $SiCl_4$ mit Natrium (Mater. Res. Bull. 16(4), 437 (1981); DE-A 2 800 254),

die Reduktion von $SiCl_4$ mit Zink (US-A 3 012 862) sowie

die Reduktion von $SiCl_4$ mit Aluminium bei 360°C (P. Pascal, Nouveau traite de chimie minerale, Band VIII, 2. Heft, Silicium, Seite 275).

Aus wirtschaftlicher Sicht genügen diese Verfahren nicht den Ansprüchen, um im großtechnischen Maßstab ein Silicium für Solarzellen herzustellen. Aus der EP-A- 0 123 100 ist ein Verfahren bekannt, bei dem festes Aluminium mit Si-Halogeniden bei 500 bis 660° C umgesetzt wird. Mit diesem Verfahren wird ein reines für Solarzellen geeignetes Silicium in wirtschaftlicher Weise erhalten.

Von Yoshizawa et al. (Kagyo kagaku Zasshi <u>64</u> (1961), 1347 bis 1350) wird die Reaktion von flüssigem Aluminium mit $SiCl_4$ zwischen 750 und 1000° C beschrieben. Dabei wird ein Bad aus flüssigem Aluminium bei Reaktionstemperatur vorgelegt und Siliciumtetrachlorid übergeleitet. Danach werden maximal 50 Gew.-% Silicium mit anhaftendem Aluminium gewonnen. Das Silicium wurde durch Lösen des Restaluminiums in Säure isoliert. Diese Methode ist für ein wirtschaftliches Verfahren nicht praktikabel. Da für die von Yoshizawa et al. angegebene Reaktionsführung die Diffusion von gelöstem Silicium im geschmolzenen Aluminium (D = $10^{-5}$ $cm^2/S$) der geschwindigkeitsbestimmende Schritt ist, ergeben sich relativ lange Reaktionszeiten. Ein kompletter Aluminiumumsatz in wirtschaftlich vertretbarer Zeit findet nicht statt.

Die Reaktion wird dabei im wesentlichen von der Temperatur, der Atmosphäre sowie dem $SiCl_4$-Durchsatz beherrscht. Auch bei den beschriebenen Optimierungen blieben die oben beschriebenen Nachteile bestehen.

Aufgabe der vorliegenden Erfindung war es daher, ein wirtschaftliches Verfahren zur Verfügung zu stellen, welches die oben beschriebenen Nachteile nicht aufweist.

Überraschenderweise wurde nun gefunden, daß bei einer entsprechenden Verfahrensführung, bei der ein intensiver Kontakt einer möglichst großen Aluminiumoberfläche mit dem Reaktionsgas sichergestellt ist, die nahezu quantitative Umsetzung in wirtschaftlicher Weise möglich ist.

Gegenstand der vorliegenden Erfindung ist somit ein Verfahren zur Herstellung von Silicium durch Umsetzung von gasförmigen Siliciumverbindungen der allgemeinen Formel $SiH_nX_{4-n}$, wobei X Halogen bedeutet und n Werte von 0 bis 3 annehmen kann, mit Aluminium, wobei bei der Umsetzung eine feinverteilte schmelzflüssige Oberfläche, bestehend aus reinem Aluminium oder einer Al-Si-Legierung, mit der gasförmigen Siliciumverbindung intensiv kontaktiert wird. In einer bevorzugten Ausführungsform des erfindungsgemäßen Verfahrens wird die intensive Kontaktierung durch eine feine Verteilung des schmelzflüssigen Aluminiums in einem Raum erreicht, der die gasförmige Siliciumverbindung enthält. Besonders gute Ergebnisse werden dann erreicht, wenn die schmelzflüssige Oberfläche mindestens $10^{-3}$ $m^2/g$ beträgt. Umgekehrt ist natürlich auch die feine Verteilung von $SiCl_4$-Gas in flüssigem Aluminium möglich. Um einen quantitativen Umsatz zu erhalten, muß eine intensive Kontaktierung durch eine feine Verteilung der gasförmigen Siliciumverbindung in der Schmelze erreicht werden. Dies kann erfindungsgemäß dadurch erreicht werden, daß das Maximum der Gasblasenverteilung in der Schmelze bei einer Gasblasengröße von maximal 5 mm eingestellt wird. In einer bevorzugten Ausführungsform des erfindungsgemäßen Verfahrens wird das Aluminium in Form feiner Tröpfchen besonders bevorzugt Aluminiumtröpfchen <500 μm zur Reaktion gebracht. Bei der Reaktion von Aluminiumtröpfchen erhält man als Produkt einen Silicium-Grieß mit vergleichbarer Korngröße, der sich gut handhaben läßt. Die Überführung des flüssigen Aluminiums in Tröpfchenform erfolgt nach bekannten Verfahren (A. Lowley International Journal of Powder Metallurgy and Powder Technology Vol. 13 (3) Juli 1977), z.B. der Verdüsung einer Schmelze mit Ein- oder Zweistoffdüsen bzw. der Zerteilung der Schmelze durch Zentrifugalkräfte. Entsprechend dem erfindungsgemäßen Verfahren wird der Zerteilungsprozeß direkt in einer Silicium-Halogenid-Atmosphäre durchgeführt, wobei die Reaktion stattfindet. Der anzustrebende quantitative Umsatz ist dabei abhängig von der Aluminiumschmelzteilchengröße, der Verweilzeit und der Silicium-Halogenid-Gaskonzentration. Die bevorzugte Temperatur beim erfindungsgemäßen Verfahren liegt oberhalb von 660° C, besonders bevorzugt zwischen 700° C und 1000° C.

Die Verweilzeit kann über die Flug- bzw. Fallstrecke der Schmelzteilchen im Reaktor eingestellt werden. Die Schmelzteilchengröße hängt von den Parametern des Zerteilungsprozesses ab. Bei der Verdüsungsmethode kann sie über Vordruck und Düsenwahl eingestellt werden.

Das erfindungsgemäße Verfahren ist unabhängig von der Verwendung eines bestimmten Siliciumhalogenids, Halogensilans, Silans oder irgendeiner zwei- oder mehr-komponentigen Mischung derselben sowie unabhängig von ihrer Gewinnung aus irgendeinem chemischen oder physikalischen Prozeß. Dabei werden als Halogenide im Sinne der Erfindung Fluor, Chlor, Brom und Iod verstanden. Die Zufuhr der gasförmigen Siliciumverbindung zur Reaktion kann in reiner Atmosphäre oder zusammen mit inerten, an der Reaktion nicht teilnehmenden Gasen, wie z.B. Ar, $SF_6$ erfolgen. Vorzugsweise wird die Siliciumverbindung im Überschuß eingesetzt.

In einer besonders bevorzugten Erfindungsform wird als Siliciumverbindung Siliciumtetrachlorid $SiCl_4$ eingesetzt. Bei der Umsetzung von destillativ gereinigtem $SiCl_4$ mit reinem Aluminium bildet sich reines Silicium neben reinem $AlCl_3$. Diese Variante kann zu einem eleganten Kreisprozeß (EP-A 0 123 100) des erfindungsgemäßen Verfahrens ausgestaltet werden. Dabei ist der Vorteil des erfindungsgemäßen Verfahrens gegenüber EP-A 0 123 100 darin zu sehen, daß durch Rein-$AlCl_3$-Elektrolyse erhaltenes hochreines Aluminium direkt flüssig in den Prozeß zurückgeführt werden kann. Durch Einsparung eines Verfahrensschrittes, nämlich der Überführung des Aluminiums in eine feinteilige feste Form, ist ein hoher wirtschaftlicher und Qualitätsvorteil bezüglich Produktreinheit gegeben. Die Produktionskapazität gegenüber der EP-A 0 123 100 wird beträchtlich gesteigert.

Im folgenden wird die Erfindung beispielhaft erläutert, ohne daß hierin eine Einschränkung zu sehen ist.

## Beispiel 1

In einer auf 800° C beheizten Apparatur, bestehend aus einem 100-1-Quarzglasgefäß mit Gasein- und -auslaßstutzen, wird über eine darin eingelassene Verdüsungsvorrichtung (Düsendurchmesser 1 mm) bei einem Vordruck von 4 bar innerhalb von 10 s ca. 0,3 kg schmelzflüssiges Aluminium in eine $SiCl_4$-Atmosphäre verdüst. Die Zufuhr an, auf 600° C geheiztem und gereinigtem $SiCl_4$, wird dabei so eingestellt, daß ein stöchiometrischer $SiCl_4$-Überschuß von 200 % gewährleistet ist. Das eingesetzte Aluminium setzt sich nahezu vollständig unter Bildung von $AlCl_3$ zu Silicium um. Das absublimierte $AlCl_3$ wird mit dem überschüssigen $SiCl_4$ abgeleitet und in geeigneten Vorlagen kondensiert. Am Austrag des Reaktors wird das gebildete Silicium in Form von Granulat (Korndurchmesser zwischen 100 und 800 µm) abgenommen. Die Verunreinigungen im Silicium sind von den Verunreinigungen im eingesetzten Aluminium abhängig. Bei Verwendung von reinstem Aluminium wird direkt ein hochreines Silicium erhalten.

## Beispiel 2

In einem Quarzgefäß werden 100 g geschmolzenes Aluminium bei 700° C vorgelegt. Das Gefäß ist mit einem Einleitrohr aus Quarzglas versehen. Durch dieses werden innerhalb von 1 Std. insgesamt 1200 g $SiCl_4$ in die Schmelze eingeleitet, wobei die Temperatur kontinuierlich auf 1460° C gesteigert wird. Die Abgase werden dabei über einen Stutzen in eine Kondensationsapparatur abgeführt. Nach dem Erkalten werden 40 g hochreines Silicium in Form eines Regulus gewonnen.

## Patentansprüche

1. Verfahren zur Herstellung von Silicium durch Umsetzung von gasförmigen Siliciumverbindungen der allgemeinen Formel $SiH_nX_{4-n}$, wobei X Halogen bedeutet und n Werte von 0 bis 3 annehmen kann, mit Aluminium, dadurch gekennzeichnet, daß bei der Umsetzung eine feinverteilte schmelzflüssige Oberfläche, bestehend aus reinem Aluminium oder einer Al-Si-Legierung, mit der gasförmigen Siliciumverbindung intensiv kontaktiert wird.

2. Verfahren gemäß Anspruch 1, dadurch gekennzeichnet, daß die intensive Kontaktierung durch eine feine Verteilung des schmelzflüssigen Aluminiums in einem Raum erreicht wird, der die gasförmige Siliciumverbindung enthält.

3. Verfahren gemäß einem der Ansprüche 1 oder 2, dadurch gekennzeichnet, daß die schmelzflüssige Oberfläche mindestens $10^{-3}$ m²/g Aluminium beträgt.

4. Verfahren gemäß einem oder mehrerer der Ansprüche 1 bis 3, dadurch gekennzeichnet, daß die intensive Kontaktierung durch eine feine Verteilung der gasförmigen Siliciumverbindung in der Schmelze erreicht wird.

5. Verfahren gemäß Anspruch 4, dadurch gekennzeichnet, daß das Maximum der Gasblasenverteilung in der Schmelze bei einer Gasblasengröße von maximal 5 mm eingestellt wird.

6. Verfahren gemäß einem oder mehrerer der Ansprüche 1 bis 3, dadurch gekennzeichnet, daß das Aluminium in Form feiner Tröpfchen zur Reaktion gebracht wird.

7. Verfahren gemäß Anspruch 6, dadurch gekennzeichnet, daß bevorzugt Al-Tröpfchen <500 µm zur Reaktion gebracht werden.

8. Verfahren gemäß einem oder mehrerer der Ansprüche 1 bis 7, dadurch gekennzeichnet, daß die Reaktion bei Temperaturen oberhalb von 660° C, bevorzugt zwischen 700° C und 1000° C, durchgeführt wird.

9. Verfahren gemäß einem oder mehrerer der Ansprüche 1 bis 8, dadurch gekennzeichnet, daß das schmelzflüssige Aluminium durch Verdüsen in Tröpfchenform überführt wird.

10. Verfahren gemäß einem oder mehrerer der Ansprüche 1 bis 9, dadurch gekennzeichnet, daß die Tröpfchenform des schmelzflüssigen Aluminiums durch Zentrifugalkräfte erhalten wird.

## Claims

1. A process for production of silicon by reaction of gaseous silicon compounds of general formula $SiH_nX_{4-n}$, where X signifies halogen and n can take values of 0 to 3, with aluminium, characterized by the fact that in the reaction a finely-divided molten surface consisting of pure aluminium or an Al-Si alloy is intensively contacted with the gaseous silicon compound.

2. A process according to Claim 1, characterized by the fact that the intensive contacting is achieved by a fine dispersion of the molten aluminium in a chamber containing the gaseous silicon compound.

3. A process according to one of Claims 1 or 2, characterized by the fact that the molten surface area is at least $10^{-3}$ m² / g aluminium.

4. A process according to one or several of Claims 1 to 3, characterized by the fact that the intensive contacting is achieved by a fine dispersion of the gaseous silicon compound in the melt.

5. A process according to Claim 4, characterized by the fact that the maximum of the gas bubble distribution in the melt is adjusted to a maximum gas bubble size of 5 mm.

6. A process according to one or several of Claims 1 to 3, characterized by the fact that the aluminium is reacted in the form of fine droplets.

7. A process according to Claim 6, characterized by the fact that preferably Al droplets < 500 µm are reacted.

8. A process according to one or several of Claims 1 to 7, characterized by the fact that the reaction is carried out at temperatures above 660°C, preferably between 700°C and 1000°C.

9. A process according to one or several of Claims 1 to 8, characterized by the fact that the liquid aluminium is converted into the form of droplets by spraying.

10. A process according to one or several of Claims 1 to 9, characterized by the fact that the droplet form of the molten aluminium is obtained by centrifugal forces.

## Revendications

1. Procédé de production de silicium par réaction de composés gazeux contenant du silicium, de formule générale $SiH_nX_{4-n}$ dans laquelle X désigne un halogène et n peut prendre des valeurs de 0 à 3, avec l'aluminium, caractérisé en ce que pendant la réaction, une surface de matière liquéfiée par fusion, finement divisée, constituée d'aluminium pur ou d'un alliage Al-Si, est maintenue intensément en contact avec le composé gazeux de silicium.

2. Procédé suivant la revendication 1, caractérisé en ce que le maintien en contact intense est réalisé par une fine division de l'aluminium à l'état fondu dans un espace qui contient le composé gazeux de silicium.

3. Procédé suivant l'une des revendications 1 ou 2, caractérisé en ce que la surface à l'état fondu s'élève au moins à $10^{-3}$ m²/g d'aluminium.

4. Procédé suivant une ou plusieurs des revendications 1 à 3, caractérisé en ce que le contact intense est réalisé par une fine division du composé gazeux de silicium dans la masse fondue.

5. Procédé suivant la revendication 4, caractérisé en ce que le maximum de répartition de nulles de gaz dans la masse fondue est établi pour une grosseur maximale des bulles de gaz de 5 mm.

6. Procédé suivant une ou plusieurs des revendications 1 à 3, caractérisé en ce que l'aluminium est mis en réaction sous forme de fines gouttelettes.

7. Procédé suivant la revendication 6, caractérisé en ce qu'on fait réagir de préférence des gouttelettes d'aluminium inférieures à 500 μm.

8. Procédé suivant une ou plusieurs des revendications 1 à 7, caractérisé en ce que la réaction est conduite à des températures au-dessus de 660°C, de préférence comprises entre 700 et 1000°C.

9. Procédé suivant une ou plusieurs des revendications 1 à 8, caractérisé en ce que l'aluminium à l'état fondu est transformé en gouttelettes par atomisation.

10. Procédé suivant une ou plusieurs des revendications 1 à 9, caractérisé en ce que la forme de gouttelettes de l'aluminium fondu est obtenue par la force centrifuge.